# NEW EUROPEAN PATENT SPECIFICATION

(11) **EP 3 316 756 B2**
(45) Date of publication and mention of the opposition decision: **02.03.2022**
(45) Mention of the grant of the patent: 02.01.2019
(21) Application number: 17720154.8
(22) Date of filing: 03.05.2017
(51) Int. Cl.: A47L 9/28

(54) **VACUUM CLEANER**
STAUBSAUGER
ASPIRATEUR

(30) Priority: 03.05.2016 EP 16168147
(43) Date of publication of application: 09.05.2018
(73) Proprietor: Koninklijke Philips N.V., 5656 AG Eindhoven (NL)
(72) Inventor: VAN DER KOOI, Johannes, Tseard, 5656 AE Eindhoven (NL); KOOPMANS, Emiel, 5656 AE Eindhoven (NL)
(74) Representative: Philips Intellectual Property & Standards
(86) International application number: PCT/EP2017/060467
(87) International publication number: WO 2017/191155

(56) References cited:
- EP-A2- 0 527 567
- EP-A2- 2 617 340
- DE-A1- 2 032 476
- GB-A- 2 479 985
- US-A1- 2003 034 699
- US-A1- 2011 265 285

## Description

### FIELD OF THE INVENTION

The invention relates to a vacuum cleaner.

### BACKGROUND OF THE INVENTION

Vacuum cleaners comprise an aggregate formed by a fan and a motor for driving the fan. Generally, vacuum cleaner aggregates need cooling flow to prevent the aggregate from overheating. Usually the air flow which is generated by the aggregate itself is used as cooling flow. This means that the aggregate always needs a certain amount of air flow and thus the inlet cannot be blocked completely. In case the inlet of a vacuum cleaner is blocked, the aggregate would overheat and may break down. This problem is usually solved by means of a safety valve, which opens when a specific pressure is reached. Because of the blockage of the inlet, the aggregate will generate pressure. If the pressure is sufficient high (and thus the flow rate sufficient low), the safety valve will open and provide the aggregate with the required amount of cooling flow.

US 6,349,738 discloses a bleed valve for introducing bled fluid to a mainstream fluid flowing through apparatus across which a pressure differential occurs. The bleed valve is adapted to open so as to bleed fluid into the mainstream fluid when the pressure differential across the apparatus falls below a predetermined value.

US 2011/0265285 discloses a vacuum cleaner capable of detecting blockage along an airpath of vacuum by determining the amperage flow of the electrical current, and detecting blockage along an airpath by sampling the amperage flow of the electrical current and counting how many times the sampled amperage draw exceeds a threshold amperage within a window of time. When the samples sampled exceeds the percent threshold determined, power to motor assembly is terminated.

EP 2,617,340 discloses a device that detects a pressure difference between a suction air pressure upstream of a dust collecting container and another suction air pressure downstream of the dust collecting container, and adjusts the electrical power consumption of a vacuum cleaner motor, when the detected pressure difference is above or below a preset differential pressure threshold value.

### SUMMARY OF THE INVENTION

In prior art vacuum cleaners, such a bleed valve is dimensioned for the maximum suction power setting. For lower suction power settings, the bleed valve does not provide sufficient protection on its own, but this is of no big concerns as prior art vacuum cleaners allow for sufficient leakage elsewhere so that the motor is not too easily overheated. However, modern energy-conscious vacuum cleaners do not have a leakage that is sufficient to protect the motor, so that a new solution is needed to protect a vacuum cleaner motor from overheating when the suction power setting is not maximal. It is not a suitable solution to simply dimension the safety valve for a power setting lower than the maximum power setting, as this would result in the safety valve opening for power settings higher than that lower power setting for which the safety valve has been dimensioned.

It is, inter alia, an object of the invention to provide an improved vacuum cleaner. The invention is defined by the independent claims. Advantageous embodiments are defined in the dependent claims.

In accordance with an aspect of the invention, a vacuum cleaner comprises a motor-fan aggregate, and a control for controlling a power setting of the motor-fan aggregate, a processor is arranged for protecting the motor-fan aggregate from overheating and/or entering a stall regime in dependence on a comparison of a parameter relating to an air flow rate with a threshold that is representative of the rotation speed of the aggregate. The threshold depends on a power setting of the motor-fan aggregate. The parameter relating to the air flow rate may be a pressure difference between on the one hand a position upstream or downstream of the motor-fan aggregate, and on the other hand, ambient, a pressure difference over a known component, a pressure difference over the motor-fan aggregate, and/or - if the threshold depends on the power setting - a rotation speed of the motor-fan aggregate. The processor may be arranged for protecting the motor-fan aggregate by opening a valve upstream of the motor-fan aggregate, and/or by lowering a rotation speed of the motor-fan aggregate.

These and other aspects of the invention will be apparent from and elucidated with reference to the embodiments described hereinafter.

### BRIEF DESCRIPTION OF THE DRAWINGS

Fig. 1 illustrates an embodiment of a vacuum cleaner VC in which a pressure difference P is measured between on the one hand, a chamber upstream of an aggregate A, and on the other hand, ambient;
Fig. 2 illustrates an embodiment of vacuum cleaner VC in which pressure difference P is measured between on the one hand, a chamber downstream of aggregate A, and on the other hand, ambient;
Figs. 3A and 3B illustrate embodiments of a vacuum cleaner VC in which pressure difference P is measured over a known component;
Fig. 4 illustrates an embodiment of vacuum cleaner VC in which pressure difference P is measured over aggregate A;
Fig. 5 illustrates an embodiment of vacuum cleaner VC in which, controlled by microprocessor µP, action is taken if a rotation speed N of aggregate A exceeds a threshold value N_{threshold} depending on a power setting PS;
Fig. 6 illustrates an embodiment of vacuum cleaner VC having an electronically controlled valve ECV that is controlled by microprocessor µP, which alternatively or additionally controls aggregate A to shut it down or at least lower its rotation speed;
Fig. 7 illustrates a relation between pressure drop H (in mBar) and flow rate Q (in 1/s) through a component;
Fig. 8 illustrates aggregate performance by a relation at constant voltage between rotation speed S (in rpm) and the flow rate Q through an aggregate for one power setting for four different aggregates of a same type; and
Fig. 9 illustrates a motor-fan performance by a relation at constant voltage between the pressure H - flow rate Q (curves with small balls ●), and the rotation speed S - flow rate Q (curves with small triangles A) through the aggregate, for five different power settings of the same aggregate.

### DESCRIPTION OF EMBODIMENTS

Apart from the above-mentioned overheating problem, at low air flow rates and high pressures the aggregate can enter a stall regime. In that regime stall occurs on the fan blades, reducing the performance of the fan. The stall effect also produces a very distinguishing sound (helicopter like). Consumers can experience that as being bad for the vacuum cleaner, and dislike the use of it. The safety valve can be designed such that the aggregate will never enter the stall regime.

In an embodiment of the invention, the flow rate is determined with a known relation, coupled to the power setting, and for each power setting a threshold flow rate is determined in order to prevent the aggregate from overheating or entering the stall regime.

It is alternatively possible to use the rotation speed of the aggregate directly, instead of using the power setting as an input that is representative of the rotation speed. Doing so may have advantages if the mains voltage fluctuates, as in such cases the relation between power setting and rotation speed also fluctuates. This embodiment of the invention creates a safety valve by measuring the speed of rotation of the aggregate (to determine the performance of the fan) and simultaneously measuring the pressure over, or the flow-rate through, the fan. Every speed of rotation will then have its threshold, on pressure difference or flowrate, at which action should be undertaken in order to prevent overheating of the aggregate or to prevent the aggregate to entering the stall regime.

The flow rate can be determined in different ways using:
1. a pressure difference between the chamber upstream or downstream of the aggregate and ambient pressure (as currently designed safety valves), or
2. a pressure difference over a component where the relation between pressure and flow is known and does not change in time, or
3. a pressure difference over the aggregate, or
4. a rotation speed of the aggregate. Only this last option is not possible if the rotation speed is used directly instead of the power setting, in combination with any of the above 3 pressure differences.
These four ways to determine the flow rate will be described in more detail below.

### 1. Pressure difference between the chamber upstream or downstream of the aggregate and ambient pressure (as currently designed safety valves).

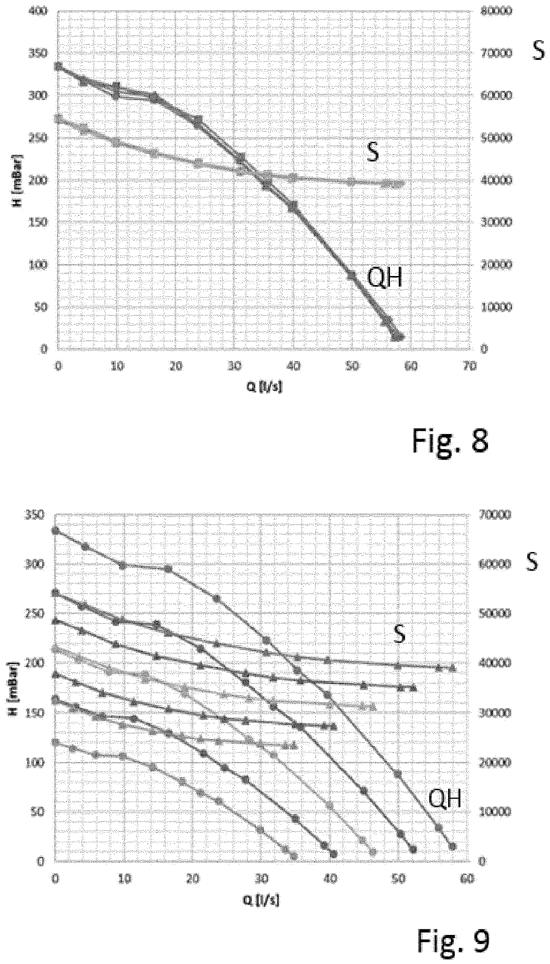

The same pressure difference where the currently designed safety valves work on (chamber upstream aggregate - ambient) can be used in combination with the QH-curve (flow rate Q - pressure H relation) of the aggregate in order to determine the flow rate. For every power setting the required cooling flow is different (a lower power setting requires a lower cooling flow). Next to that, for every power setting there exists a different relation between pressure H and flow rate Q of the aggregate (see Fig. 9). This means that for every power setting a different relation between pressure H and flow rate Q is used to determine whether enough cooling flow is passing through the aggregate.

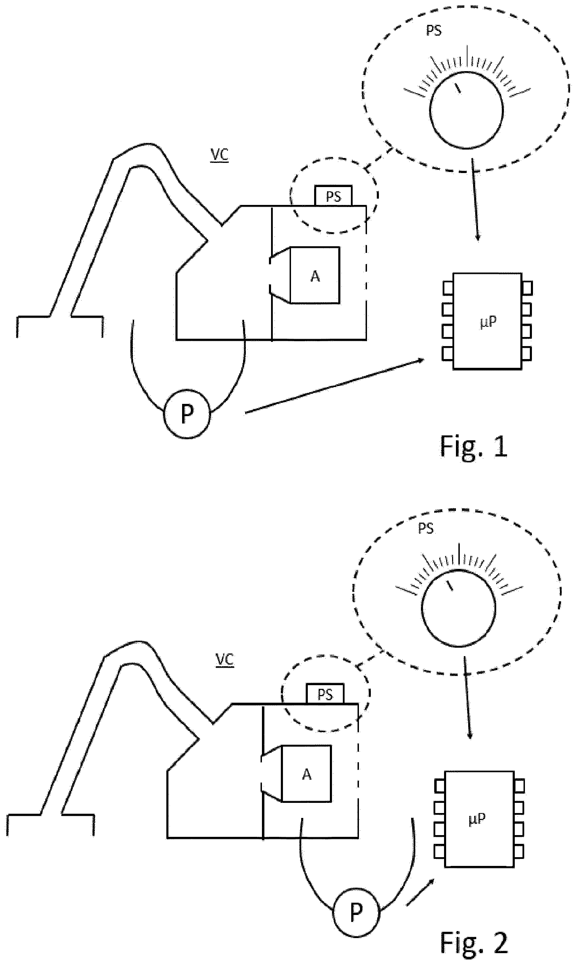

Fig. 1 illustrates an embodiment of a vacuum cleaner VC in which a pressure difference P is measured between on the one hand, a chamber upstream of an aggregate A, and on the other hand, ambient. Controlled by a microprocessor µP, action is taken if abs[P] > P_{threshold}, in which the threshold value P_{threshold} depends on the power setting PS as controlled by a power setting PS control. This power setting control may be a rotary knob or may take any other suitable form (e.g. 3 pushbuttons for a low, a medium and a high power setting PS, or a linear touch sensor for inputting the desired power setting PS).

Alternatively, if the rotation speed N of the aggregate A is used directly, microprocessor µP ensures that action is taken if abs[P] > P_{threshold}, in which the threshold value P_{threshold} depends on the rotation speed N of the aggregate.

Fig. 2 illustrates an embodiment of vacuum cleaner VC in which pressure difference P is measured between on the one hand, a chamber downstream of an aggregate A, and on the other hand, ambient.
Controlled by microprocessor µP, action is taken if abs[P] < P_{threshold}, in which the threshold value P_{threshold} depends on the power setting PS as controlled by a power setting PS control.

Alternatively, if the rotation speed N of the aggregate A is used directly, microprocessor µP ensures that action is taken if abs[P] < P_{threshold}, in which the threshold value P_{threshold} depends on the rotation speed N of the aggregate.

### 2. Pressure difference over a component where the relation between pressure and flow is known and does not change in time.

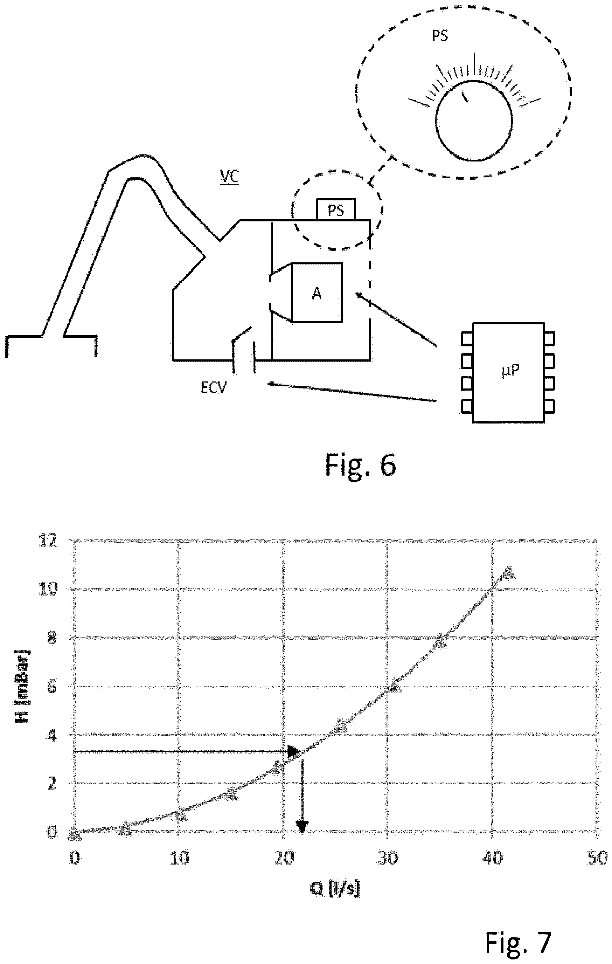

There exists a clear relation between the pressure loss H over a component and the flow rate Q through that component (see Fig. 7). By measuring the pressure difference over this component the flow rate is known. For this, the power setting PS is not necessary. However, the power setting PS has to be known to determine the threshold value of the flow rate (i.e. a lower power setting requires a lower cooling flow).

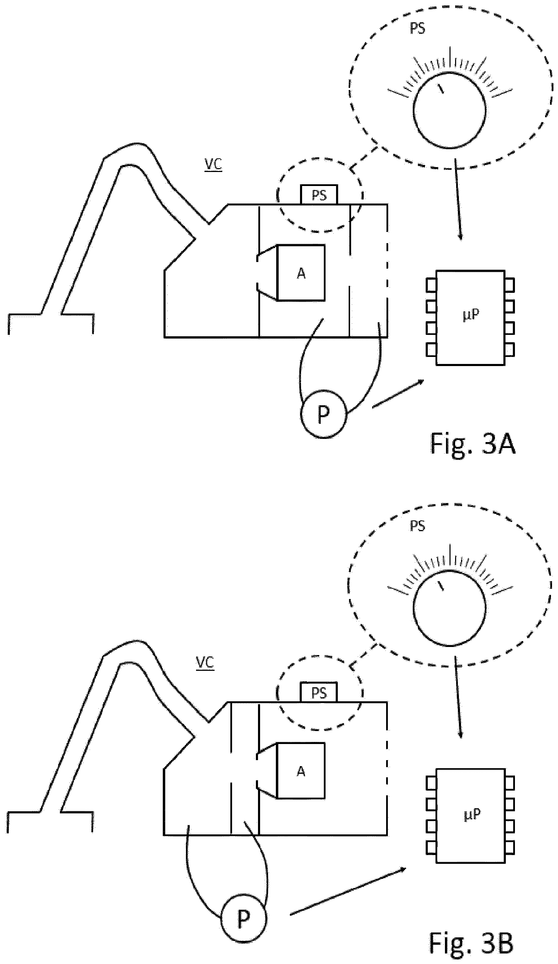

Figs. 3A and 3B illustrate embodiments of vacuum cleaner VC in which pressure difference P is measured over a known component. The known component may be a flow resistance, e.g. a compartment boundary having a hole with a known size. The known component may be downstream of the aggregate A (as shown in Fig. 3A), or upstream of the aggregate A (as shown in Fig. 3B).

Controlled by microprocessor µP, action is taken if abs[P] < P_{threshold}, in which the threshold value P_{threshold} depends on the power setting PS as controlled by a power setting PS control.

Alternatively, if the rotation speed N of the aggregate A is used directly, microprocessor µP ensures that action is taken if abs[P] < P_{threshold}, in which the threshold value P_{threshold} depends on the rotation speed N of the aggregate.

### 3. Pressure difference over the aggregate.

There exists a clear relation between flow rate and pressure of the aggregate in a specific setting (see Fig. 9). If the pressure H over the aggregate A and the power setting PS (and thus the QH-curve of the aggregate A) are known, the flow rate Q can be determined. For every power setting PS the required cooling flow is different (as a lower power setting PS requires a lower cooling flow). Next to that, for every power setting PS there exists a different relation between pressure H and flow rate Q of the aggregate (see Fig. 9). This means that for every power setting PS a different relation between pressure H and flow rate Q is used to determine whether enough cooling flow is passing through the aggregate A.

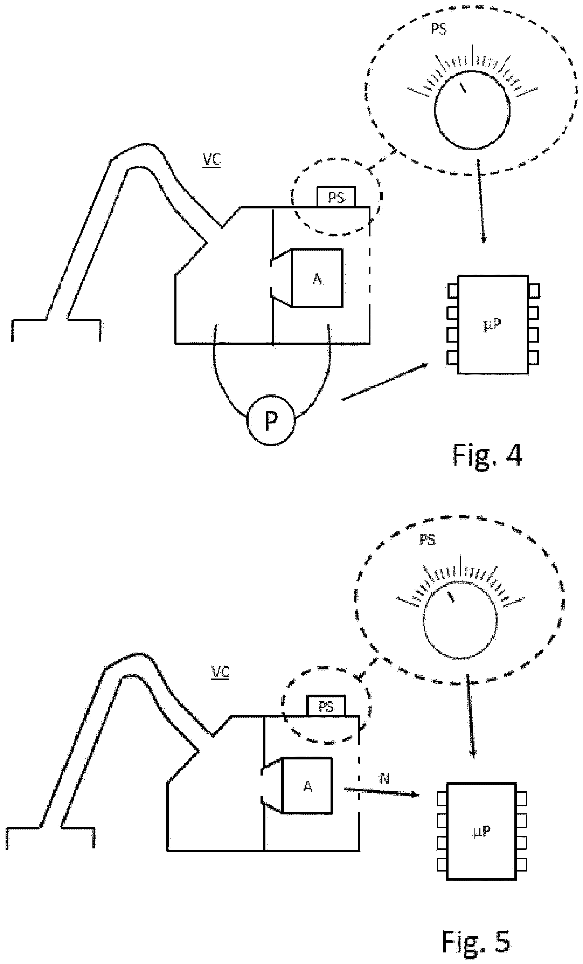

Fig. 4 illustrates an embodiment of vacuum cleaner VC in which pressure difference P is measured over the aggregate A. Controlled by microprocessor µP, action is taken if abs[P] > P_{threshold}, in which the threshold value P_{threshold} depends on the power setting PS as controlled by a power setting PS control.

Alternatively, if the rotation speed N of the aggregate A is used directly, microprocessor µP ensures that action is taken if abs[P] > P_{threshold}, in which the threshold value P_{threshold} depends on the rotation speed N of the aggregate.

### 4. Rotation speed of the aggregate.

There exists a clear relation between flow through the aggregate (at a specific power setting or voltage) and the rotation speed S (see Fig. 7). At a specific power setting the rotation speed S will increase if the pressure H is increased, and therewith the flow rate Q decreases. By determining the rotation speed S of the aggregate, the flow rate Q through the aggregate is known. For every power setting PS the required cooling flow is different (a lower power setting PS requires a lower cooling flow). Next to that, for every power setting PS there exists a different relation between rotation speed S and flow rate Q (see Fig. 8). This means that for every power setting PS a different relation between rotation speed S and flow rate Q is used to determine whether enough cooling flow is passing through the aggregate A.

Fig. 5 illustrates an embodiment of vacuum cleaner VC in which, controlled by microprocessor µP, action is taken if N > N_{threshold}, in which the threshold value N_{threshold} depends on the power setting PS as controlled by the power setting PS control. The rotation speed N of aggregate A may be measured separately, or measured indirectly using the current through the motor, or by carrying out signal recognition on voltage peaks at a collector of the motor, or in any other suitable way.

If it is determined that the cooling flow is too low, actions can be taken in order to prevent the aggregate A from overheating or entering the stall regime. The above data (power setting / rotation speed in combination with pressure difference between a chamber upstream/downstream of the aggregate and ambient, over a known component, or over the aggregate, or the combination of power setting and rotation speed) can be processed in microprocessor µP in order to determine the flow rate Q (using the relation between the rotation speed S and the flow rate Q of the aggregate A corresponding to the imposed power setting PS).

After calculation of the flow rate Q, different actions can be performed if a too low flow rate is encountered:
- (electronically) open a valve upstream of the aggregate A,
- lower the rotation speed of the aggregate. The rotation speed can/will increase again to the value corresponding to the imposed power setting, if the blockage is removed. This option is possible because at a lower rotation speed a lower cooling flow is needed. Of course, lowering the rotation speed to zero (i.e. shutting down the aggregate A) is one way of lowering the speed that is very effective in protecting the aggregate from overheating.

Fig. 6 illustrates an embodiment of vacuum cleaner VC having an electronically controlled valve ECV that is controlled by microprocessor µP, which microprocessor µP alternatively or additionally controls aggregate A to shut it down or at least lower its rotation speed.

It should be noted that the above-mentioned embodiments illustrate rather than limit the invention, and that those skilled in the art will be able to design many alternative embodiments without departing from the scope of the appended claims. The processor µP for protecting the motor-fan aggregate A from overheating and/or entering a stall regime may very well carry out other functions as well. The processor µP does not need to be a microprocessor; it may be any suitable control unit. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention may be implemented by means of hardware comprising several distinct elements, and/or by means of a suitably programmed processor. In the device claim enumerating several means, several of these means may be embodied by one and the same item of hardware. The mere fact that certain measures are recited in mutually different dependent claims does not indicate that a combination of these measures cannot be used to advantage.

## Claims

1. A vacuum cleaner (VC) comprising:
a motor-fan aggregate (A),
a control for controlling a power setting (PS) of the motor-fan aggregate (A); and
a processor (µP) for protecting the motor-fan aggregate (A) from overheating
and/or entering a stall regime both being in dependence on a comparison of a parameter relating to an air flow rate with a threshold that is representative of a rotation speed of the motor-fan aggregate (A),
wherein the threshold depends on a power setting (PS) of the motor-fan aggregate (A).

2. A vacuum cleaner as claimed in claim 1, wherein at least one of the following parameters relating to the air flow rate is used:
a pressure difference between on the one hand, a position upstream or downstream of the motor-fan aggregate (A), and on the other hand, ambient, and/or
a pressure difference over a known component, and/or
a pressure difference over the motor-fan aggregate (A), and/or
a rotation speed of the motor-fan aggregate (A).

3. A vacuum cleaner as claimed in any of the preceding claims, wherein the processor (µP) is arranged for protecting the motor-fan aggregate (A) by opening a valve (ECV) upstream of the motor-fan aggregate (A), and/or by lowering a rotation speed of the
motor-fan aggregate (A).

## Patentansprüche

1. Ein Staubsauger (VC), der Folgendes umfasst:
ein Motor-Lüfter-Aggregat (A),
eine Steuerung zum Regeln der Leistungseinstellung (PS) des Motor-Gebläse-Aggregats (A);
und
einen Prozessor (µP) zum Schutz des Motor-Gebläse-Aggregats (A) vor Überhitzung
und/oder dem Wechseln in einen Blockierzustand, wobei beides auf dem Vergleich eines Parameters, der sich auf den Luftdurchsatz bezieht, mit einem Schwellenwert beruht, der Drehzahl des Motor-Gebläse-Aggregats (A) entspricht,
wobei der Schwellenwert von der Leistungseinstellung (PS) des Motor-Ventilator-Aggregats (A) abhängt.

2. Ein Staubsauger gemäß Anspruch 1, wobei in Bezug auf den Luftdurchsatz mindestens einer der folgenden Parameter verwendet wird:
die Druckdifferenz zwischen einer dem Motor-Ventilator-Aggregat (A) vor- oder nachgelagerten Position einerseits und der Umgebung andererseits, und/oder
die Druckdifferenz über eine bekannte Komponente, und/oder
die Druckdifferenz über das Motor-Ventilator-Aggregat (A), und/oder
die Drehzahl des Motor-Ventilator-Aggregats (A).

3. Ein Staubsauger gemäß einem der vorherigen Ansprüche, wobei der Prozessor (µP) das Motor-Lüfter-Aggregat (A) schützt, indem ein dem Motor-Lüfter-Aggregat (A) vorgelagertes Ventil (ECV) geöffnet und/oder die Drehzahl des Motor-Lüfter-Aggregats (A) verringert wird.

## Revendications

1. Aspirateur (VC) comprenant :
un ensemble ventilateur de moteur (A),
une commande pour commander un réglage de puissance (PS) de l'ensemble ventilateur de moteur (A) ;
et
un processeur (µP) pour protéger l'ensemble ventilateur de moteur (A) de la surchauffe
et/ou de se trouver en régime de fonctionnement instable étant dépendants d'une comparaison d'un paramètre relatif à un débit d'air avec un seuil qui est représentatif d'une vitesse de l'ensemble ventilateur de moteur (A),
dans lequel le seuil dépend d'un réglage de puissance (PS) de l'ensemble ventilateur de moteur (A).

2. Aspirateur selon la revendication 1, dans lequel au moins l'un des paramètres suivants relatif au débit d'air est utilisé :
une différence de pression entre d'une part, une position en amont ou en aval de l'ensemble ventilateur de moteur (A), et d'autre part, ambiante,
et/ou
une différence de pression sur un composant connu,
et/ou
une différence de pression sur l'ensemble ventilateur de moteur (A), et/ou
une vitesse de rotation de l'ensemble ventilateur de moteur (A).

3. Aspirateur selon l'une quelconque des revendications précédentes, dans lequel le processeur (µP) est conçu pour protéger l'ensemble ventilateur de moteur (A) en ouvrant une vanne (ECV) en amont de l'ensemble ventilateur de moteur (A) et/ou en diminuant une vitesse de rotation de l'ensemble ventilateur de moteur (A).
